# EUROPEAN PATENT APPLICATION

(11) **EP 3 858 735 A1**
(43) Date of publication of application: **04.08.2021**
(21) Application number: 19867905.2
(22) Date of filing: 18.09.2019
(51) Int. Cl.: B64D 11/02

(54) **AIRCRAFT LAVATORY UNIT**

(30) Priority: 25.09.2018 JP 2018178599
(71) Applicant: The Yokohama Rubber Co., Ltd., Tokyo 105-8685 (JP)
(72) Inventor: MURAYAMA, Hiroshi, Hiratsuka-shi, Kanagawa 254-8601 (JP)
(74) Representative: Dilg, Haeusler, Schindelmann Patentanwaltsgesellschaft mbH
(86) International application number: PCT/JP2019/036480
(87) International publication number: WO 2020/066768

(57) **Abstract**

To provide an aircraft lavatory unit that is advantageous in increasing the number of seats by reducing the width of the aircraft lavatory unit without compromising the ease of use of a sink during hand washing, and in making it difficult to wash a body portion other than hands such as an arm, a neck, and a foot in the sink and preventing the floor from getting wet by splashing water drops. A washstand (28) is provided on a side wall (2208A) of an aircraft lavatory unit (20). The washstand (28) includes a counter table (32), a sink (34) disposed in the counter table (32), and the like. A wash faucet (40) and a hand dryer (46) are provided at a location on a side surface (3404) of the sink (34), which is separated downward from an upper surface (3202) of the counter table (32). A depth (D) of the sink (34) satisfies 90 mm ≤ D ≤ 160 mm, and a height (H) of the sink (34) satisfies 120 mm ≤ H ≤ 240 mm.

## Description

### Technical Field

The present invention relates to an aircraft lavatory unit.

### Background Art

Aircraft have a plurality of seats, lavatories, and galleys disposed in a limited space of the fuselage.

Various proposals have been made from the perspective of increasing the number of seats.

For example, Patent Documents 1 and 2 describe movable aircraft lavatory units, and propose aircraft lavatory units whose layouts can be altered.

### Citation List

### Patent Document

Patent Document 1: US2008/0179456A1
Patent Document 2: US2009/0283636A1

### Summary of Invention

### Technical Problem

Nevertheless, even if the layout of aircraft lavatory units is altered, the area they occupy remains unchanged, and thus there are limits to any expansion in the number of seats.

On the other hand, focusing on an aircraft lavatory unit, a washstand including a sink is often disposed along a side wall in a lavatory inside of the aircraft lavatory unit. Further, a portion of the washstand in which the sink is located protrudes from the side wall to an inner side of the lavatory, and the space in the lavatory is narrowed in a portion of the washstand in which the sink is located. Consequently, there are also limits to reduction of the width of the aircraft lavatory unit.

Furthermore, in recent years, there are estimated many cases where portions such as arms, necks, and feet other than hands are washed in the sink of the washstand due to regional customs or the like. In this case, water drops scatter around the sink and the floor gets wet, which may cause clean-up work to become troublesome.

The present invention has been devised in view of the circumstances described above, and an object of the present invention is to provide an aircraft lavatory unit that enables the width of the aircraft lavatory unit to be reduced without compromising the ease of use of a sink during hand washing and is thus advantageous in increasing the number of seats and that makes it difficult to wash portions other than hands in the sink and is thus advantageous in preventing the floor from getting wet by scattering of water drops.

### Solution to Problem

In order to achieve the object described above, according to an embodiment of the present invention, an aircraft lavatory unit includes a washstand disposed on a side wall of a lavatory of the aircraft lavatory unit. The washstand includes a counter table and a sink disposed in the counter table. The sink has a width W along the side wall, a depth D orthogonal to the width W, and a height H. The depth D satisfying 90 mm ≤ D ≤ 160 mm, and the height H satisfying 120 mm ≤ H ≤ 240 mm.

Further, according to an embodiment of the present invention, the depth D may satisfy 100 mm ≤ D ≤ 140 mm, and the height H may satisfy 150 mm ≤ H ≤ 200 mm.

Furthermore, according to an embodiment of the present invention, the width W may satisfy 200 mm ≤ W ≤ 330 mm.

In addition, according to an embodiment of the present invention, the sink may include: a bottom surface facing upward and a side surface standing upright from a peripheral of the bottom surface and connecting to an upper surface of the counter table; a wash faucet provided at a location on the side surface, which is separated downward from the upper surface of the counter table; an object detecting unit that detects an entry of an object into the sink; and a faucet control unit allowing the wash faucet to discharge water for a predetermined water discharge time when the entry of the object is detected by the object detecting unit.

Further, according to an embodiment of the present invention, the wash faucet may be provided at a location on the side surface, which is located closer to the upper surface of the counter table than to a middle in a height direction of the sink.

Furthermore, according to an embodiment of the present invention, the aircraft lavatory unit may include: a hand dryer provided at a location on the side surface, which is separated downward from the upper surface of the counter table, the hand dryer being configured to blow air; and a drying control unit allowing the hand dryer to blow air for a predetermined drying time when water discharging from the wash faucet ends.

In addition, according to an embodiment of the present invention, the side surface may be formed of a gently inclined curved surface configured such that a horizontal cross-sectional area of the sink gradually decreases toward a lower side with an extremely small amount from the upper surface of the counter table to a height approximately one-half the height of sink, compared with from the bottom surface of the sink to the height approximately one-half the height of the sink. The horizontal cross-sectional area of the sink from the upper surface of the counter table to the height approximately one-half the height of the sink may be secured.

Moreover, according to an embodiment of the present invention, the aircraft lavatory unit may be disposed in an aircraft including a longitudinal aisle and seat groups positioned on both sides of the longitudinal aisle, the seat groups being configured such that seat rows are arranged in a longitudinal direction of a fuselage; the aircraft lavatory unit may include the lavatory that is partitioned by a bottom wall, a pair of side walls standing upright from the bottom wall and facing each other, a rear wall and a front wall standing upright from the bottom wall and facing each other, and a ceiling wall facing the bottom wall; a toilet may be disposed in front of the rear wall such that a user can be seated facing the front wall; the washstand may be disposed at one side wall of the pair of side walls; a doorway may be disposed in the front wall; and the aircraft lavatory unit may be configured such that the other side wall of the pair of side walls is disposed close to one of the seat rows, which is located at a rear end of the seat group and such that the front wall is disposed facing the longitudinal aisle.

### Advantageous Effects of Invention

According to an embodiment of the present invention, hand washing or the like can be performed in the sink without difficulties. In addition, the depth D is formed shorter than a known depth, and the height H is formed deeper than a known height. Therefore, the ease of use of the sink, for example, in washing hands is ensured, and the amount of protrusion of a portion of the counter table in which the sink is positioned into the lavatory can be reduced, which is advantageous in reducing the width of the aircraft lavatory unit without narrowing the space inside the lavatory.

Further, the sink is configured such that the depth D is formed short and the height H is formed deeper, compared with a sink of a known aircraft lavatory unit. Therefore, a user of the aircraft lavatory unit can be made to intuitively think that it is difficult to wash a body part such as the arm, neck, or foot other than the hands, which is advantageous in solving defects such as wetting of the floor due to splashing of water drops when a portion such as the arm, neck, or foot other than the hands is washed above the sink.

Furthermore, according to an embodiment of the present invention, water for hand washing is automatically discharged when the hands are put in the sink, which is advantageous for easily washing hands.

In addition, according to an embodiment of the present invention, the wash faucet is provided at a location on the side surface, which is located closer to the upper surface of the counter table than to the middle in the height direction of the sink, and is provided below the upper surface of the counter table. Consequently, water is discharged from the upper side to the hands put in the sink, which is advantageous in preventing water from splashing on the floor and solving defects such as wetting of the floor.

Further, according to an embodiment of the present invention, since the hand dryer is provided in the sink, hand washing to drying can be done inside the sink, which is advantageous in enhancing the convenience of the aircraft lavatory unit.

Furthermore, according to an embodiment of the present invention, the horizontal cross-sectional area of the sink from the upper surface of the counter table to the height approximately one-half the height of the sink is secured, which is advantageous in securing the ease of use of the sink and making a user of the aircraft lavatory unit intuitively think that it is difficult to wash a portion such as the arm, neck, or foot other than the hands.

In addition, an embodiment of the present invention is advantageous in increasing the seat rows of the seat groups located on the both sides of the longitudinal aisle.

### Brief Description of Drawings

FIG. 1 is an explanatory diagram illustrating the layout of an aircraft interior.
FIG. 2 is an explanatory diagram illustrating the relationship between an aircraft lavatory unit and seat groups according to an embodiment, which are installed within an aircraft.
FIG. 3 is a perspective view of an aircraft lavatory unit according to an embodiment.
FIG. 4(A) is a perspective view of a sink, FIG. 4(B) is a front view of the sink, FIG. 4(C) is a side view of the sink, and FIG. 4(D) is a plan view of the sink.
FIG. 5 is a cross-sectional view illustrating the configuration of a sink and the surroundings of the sink.
FIG. 6 is an explanatory diagram illustrating the relationship between an aircraft lavatory unit and seat groups according to Conventional Example, which are installed within an aircraft.

### Description of Embodiments

Next, an aircraft lavatory unit according to an embodiment of the present invention will be explained with reference to drawings.

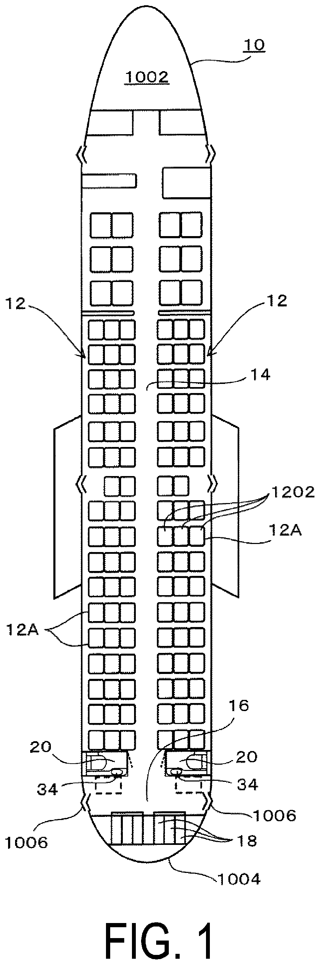

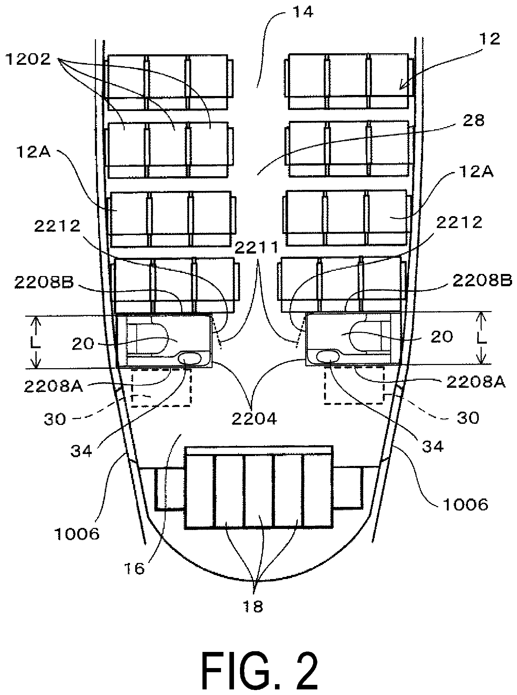

As illustrated in FIGS. 1 and 2, seat groups 12 are provided in a fuselage 10 of an aircraft, and additionally a longitudinal aisle 14 and a latitudinal aisle 16 are provided.

The front portion of the fuselage 10 serves as a control room 1002, and the rear portion serves as a pressure bulkhead 1004.

The longitudinal aisle 14 extends along the center of the fuselage 10 in the longitudinal direction of the fuselage 10.

The seat groups 12 are respectively provided on both the left and right sides of the longitudinal aisle 14, and each of the seat groups 12 is constituted by a plurality of seat rows 12A arranged in the longitudinal direction of the fuselage 10. In the present embodiment, the seat rows 12A are each constituted by three seats 1202 arranged in the width direction of the fuselage 10 and facing the front of the fuselage 10.

The latitudinal aisle 16 extends at the rear side of the seat groups 12 from aircraft doors 1006 at the rear part of the fuselage 10 in the width direction of the fuselage 10, and connects to the longitudinal aisle 14.

Galleys 18 are provided and arranged at the front side of the pressure bulkhead 1004 and at the rear side of the latitudinal aisle 16 in the width direction of the fuselage 10.

The aircraft lavatory units 20 are disposed on both sides of the longitudinal aisle 14 and located at the rear side of the seat rows 12A positioned at rear ends of the respective seat groups 12 and at the front side of the latitudinal aisle 16.

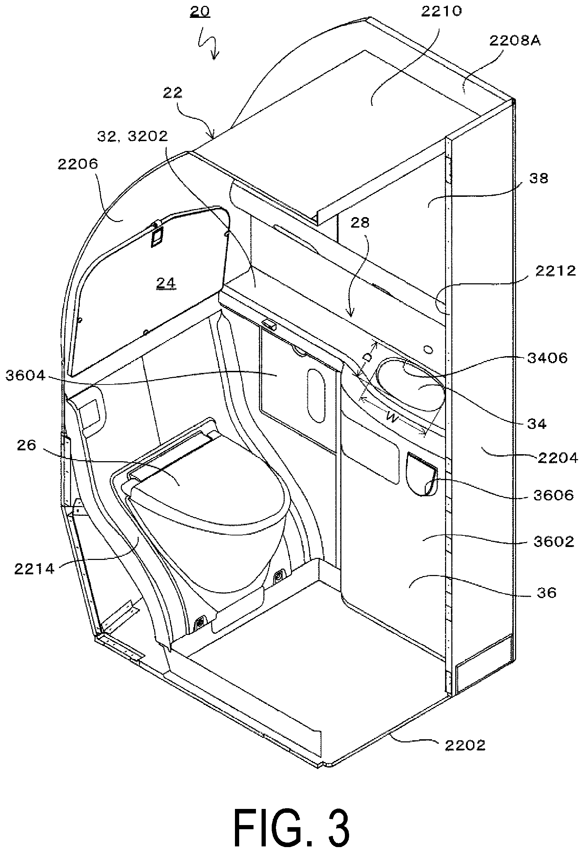

Next, the aircraft lavatory unit 20 will be described with reference to FIG. 3.

The aircraft lavatory unit 20 is provided with a structural frame 22 that includes a bottom wall 2202, a front wall 2204 standing upright from the bottom wall 2202, a rear wall 2206 standing upright from the bottom wall 2202 and facing the front wall 2204, a pair of side walls 2208A, 2208B (see FIG. 2) each standing upright from the bottom wall 2202 and connecting either side of the rear wall 2206 and either side of the front wall 2204, and a ceiling wall 2210 and that forms a lavatory 24 inside thereof.

Note that the rear wall 2206, the ceiling wall 2210, and the pair of side walls 2208A, 2208B are appropriately deformed in accordance with the shape of a location of the fuselage 10 in which the aircraft lavatory unit 20 is installed. In the present embodiment, the aircraft lavatory unit 20 is disposed on the lateral side of the longitudinal aisle 14, and the rear wall 2206, the ceiling wall 2210, and the pair of side walls 2208A, 2208B are deformed to match the body shape of the fuselage 10.

The front wall 2204 is provided with a doorway 2212 to be opened and closed by a door 2211 (see FIG. 2). An inner wall 2214 is provided in front of the rear wall 2206, and a toilet 26 is provided via the inner wall 2214 on the bottom wall 2202 to be located opposed to the front wall 2204.

Additionally, a washstand 28 is provided on one side wall 2208A of the pair of side walls 2208A, 2208B.

In the present embodiment, as illustrated in the enlarged view in FIG. 2, the aircraft lavatory unit 20 is disposed such that the front wall 2204 faces the longitudinal aisle 14, that the other side wall 2208B of the pair of side walls 2208A, 2208B is disposed close to the seat row 12A at the rear end of the seat group 12, and that one side wall 2208A on which the washstand 28 is provided is located opposed to the latitudinal aisle 16.

In addition, a direction in which the pair of side walls 2208A, 220B are located opposed to each other is a direction in which the seat rows 12A are arranged, that is, the longitudinal direction of the fuselage 10, and a dimension between outer surfaces of the pair of side walls 2208A, 2208B is a width L of the aircraft lavatory unit 20.

Moreover, reference sign 30 in FIG. 2 to FIG. 13 denotes a flight attendant seat.

The washstand 28 includes a counter table 32, a sink 34 disposed in the counter table 32, and the like.

A lower storage portion 36 in which a trash can device with a fire extinguishing function, supplies for the lavatory, and the like are stored is provided below the counter table 32. The lower storage portion 36 can be opened and closed by a plurality of doors 3602, 3604, and reference sign 3606 in FIG. 3 denotes a trash slot.

An upper storage portion 38 in which supplies for the lavatory such tissue paper are stored is provided above the counter table 32.

The sink 34 is provided in an upper surface 3202 of the counter table 32 and disposed at a location near the front wall 2204.

When the sink 34 is viewed in a plan view, the sink 34 is formed in an oval shape having a long circle along the side wall 2208A or a long axis parallel to the side wall 2208A, that is, is formed in an elongated shape along the side wall 2208A.

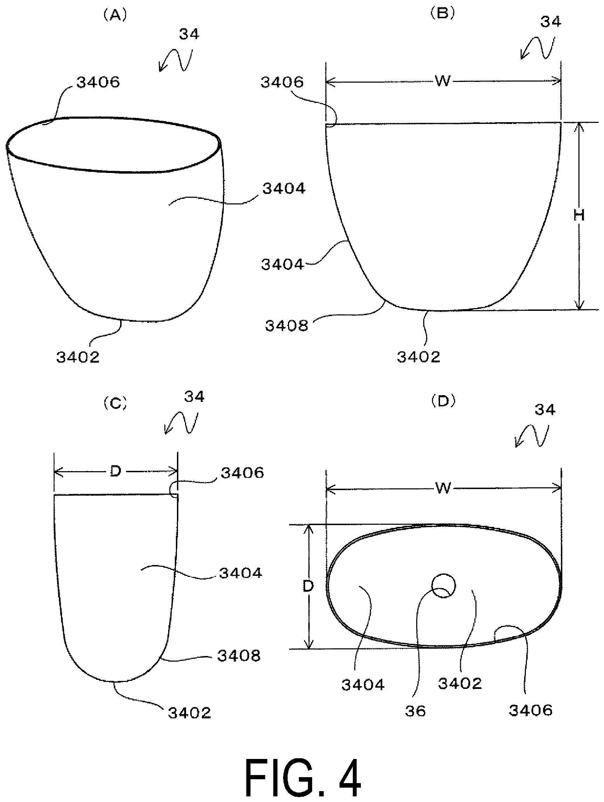

As illustrated in FIGS. 4(A) to 4(D), the sink 34 includes a bottom surface 3402 located at the center of the sink 34 and facing upward, and a curved side surface 3404.

A drain hole 36 is provided in the bottom surface 3402, and a drainpipe (not illustrated) is connected to the drain hole 36.

The bottom surface 3402 is configured such that the center of the bottom surface 3402 provided with the drain hole 36 is lowest, and is formed of a curved surface extending gradually upward and inclined gently upward away from the drain hole 36. The bottom surface 3402 extends in a width W direction and a depth D direction.

In other words, when the sink 34 is viewed in a plan view, the bottom surface 3402 is formed in an elongated shape along the side wall 2208A and has a width along the width W direction and a depth along the depth D direction, which allows for easy hand washing.

The side surface 3404 extends downward from the upper surface 3202 of the counter table 32 and is formed of a gently inclined curved surface that has a horizontal cross-sectional area of the sink 34, which decreases toward the lower side.

Specifically, as illustrated in FIGS. 4(B) and 4(C), the side surface 3404 is formed of a gently inclined curved surface configured such that the horizontal cross-sectional area of the sink 34 gradually decreases toward the lower side with an extremely small amount from the upper surface 3202 of the counter table 32 to a height approximately one-half a height H of the sink 34, compared with from the bottom surface 3402 of the sink 34 to the height approximately one-half the height H of the sink 34.

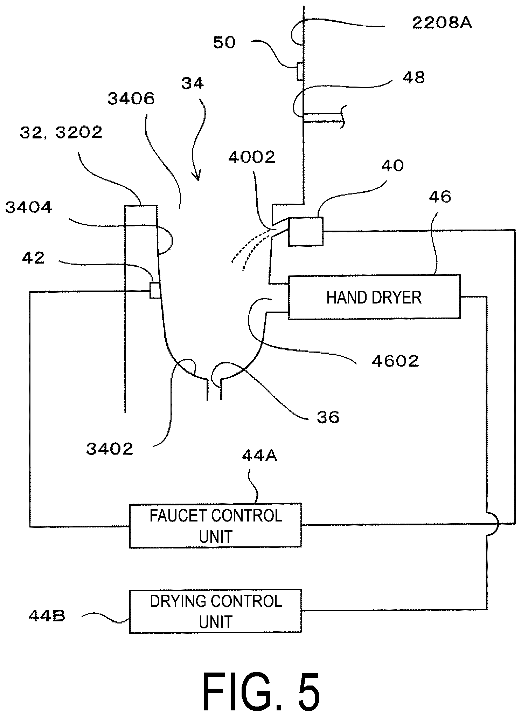

Note that, as illustrated in FIGS. 3 and 5, an inner space of a location where the upper surface 3202 and the side surface 3404 of the counter table 32 intersect is an opening 3406 of the sink 34.

A lower end of the side surface 3404 and an outer periphery of the bottom surface 3402 are connected via a connection surface 3408 that has a radius of curvature smaller than a radius of curvature of the bottom surface 3402 and a radius of curvature of the side surface 3404.

As Illustrated in FIG. 5, a wash faucet 40 is provided at a location on the side surface 3404 of the sink 34, which is separated downward from the upper surface 3202 of the counter table 32.

Specifically, a water discharge port 4002 of the wash faucet 40 is provided at a location on the side surface 3, which is located closer to the upper surface 3202 of the counter table 32 than to the middle in the height H of the sink 34 and is located below the upper surface 3202. The water discharge port 4002 is configured to discharge water from the upper side to hands put in the sink 34 and reduce water splashing, and simultaneously allows for easy hand washing.

Further, an object detecting unit 42 configured to detect the entry of an object into the sink 34 is provided. A faucet control unit 44A is provided that allows water to be discharged from the wash faucet 40 for a predetermined water discharge time when the entry of an object is detected by the object detecting unit 42, and the faucet control unit 44A is configured to automatically discharge water when hands are put in the sink 34.

Furthermore, a hand dryer 46 configured to blow air is provided at a location on the side surface 3404, which is separated downward from the upper surface 3202 of the counter table 32. Specifically, an air blowing outlet 4602 of the hand dryer 46 is provided at the location on the side surface 3404 separated downward from the upper surface 3202 of the counter table 32. A drying control unit 44B is provided that allows air to be blown out from the hand dryer 46 for a predetermined drying time when water discharging from the wash faucet 40 ends.

In other words, when hands are put in the sink 34, water is automatically discharged and then the hands are automatically dried.

In addition, a drinking water faucet 48 and a water discharge switch 50 to be operated when water is discharged from the drinking water faucet 48 are provided at a location on the side wall 2208A, which is located above the sink 34.

The sink 34 has the width W along the side wall 2208A, the depth D orthogonal to the width W, and the height H. The width W and the depth D are specifically an outline dimension of the sink 34 when the sink 34 is viewed in a plan view, that is, a dimension of the opening 3406.

The width W satisfies 200 mm ≤ W ≤ 330 mm and preferably satisfies 260 mm ≤ W ≤ 320 mm from the perspective of ensuring the ease of use of the sink 34, for example, in hand washing.

Note that the width of the sink of the conventional aircraft lavatory unit is around 300 mm.

From the perspective of reducing the width L of the aircraft lavatory unit 20 while ensuring the ease of use of the sink 34, and in addition, from the perspective of making a user of the aircraft lavatory unit 20 intuitively think that it is difficult to wash a portion such as the arm, neck, or foot other than the hands in the sink 34, the depth D satisfies 90 mm ≤ D ≤ 160 mm and preferably satisfies 100 mm ≤ D ≤ 140 mm.

Note that the depth of the sink of the conventional aircraft lavatory unit is around 200 mm.

In other words, in the present embodiment, the depth D of the sink 34 is formed shorter than conventionally. With respect to this, the depth of the location of the counter table 32 in which the sink 34 is provided is also shortened.

As described above, from the perspective of ensuring the ease of use of the sink 34, and in addition, from the perspective of making a user of the aircraft lavatory unit 20 intuitively think that it is difficult to wash a portion such as the arm, neck, or foot other than the hands in the sink 34, the height H satisfies 120 mm ≤ H ≤ 240 mm, and preferably satisfied 150 mm ≤ H ≤ 200.

Note that the height of the sink 34 of the conventional aircraft lavatory unit is around 90 mm.

In other words, in the present embodiment, the height H of the sink 34 is formed deeper than conventionally.

As described above, the side surface 3404 is formed of a gently inclined curved surface configured such that the horizontal cross-sectional area of the sink 34 gradually decreases toward the lower side with an extremely small amount from the upper surface 3202 of the counter table 32 to the height approximately one-half the height H of the sink 34, compared with from the bottom surface 3402 of the sink 34 to the height approximately one-half the height H of the sink 34, and the horizontal cross-sectional area of the sink 34 from the upper surface 3202 of the counter table 32 to the height approximately one-half the height H of the sink 34 is secured. Consequently, such a configuration is advantageous in ensuring the ease of use of the sink 34, and in addition, in making a user of the aircraft lavatory unit 20 intuitively think that it is difficult to wash a portion such as the arm, neck, or foot other than the hands.

According to the present embodiment, hand washing or the like can be performed in the sink 34 without disturbance. In addition, the depth D is formed shorter than conventionally, and the height H is formed deeper than conventionally. Consequently, the ease of use of the sink 34, for example, in washing hands is ensured, and the amount of protrusion of a portion of the counter table 32 in which the sink 34 is positioned into the lavatory 24 can be reduced, which is advantageous in reducing the width L of the aircraft lavatory unit 20 without narrowing the space inside the lavatory 24.

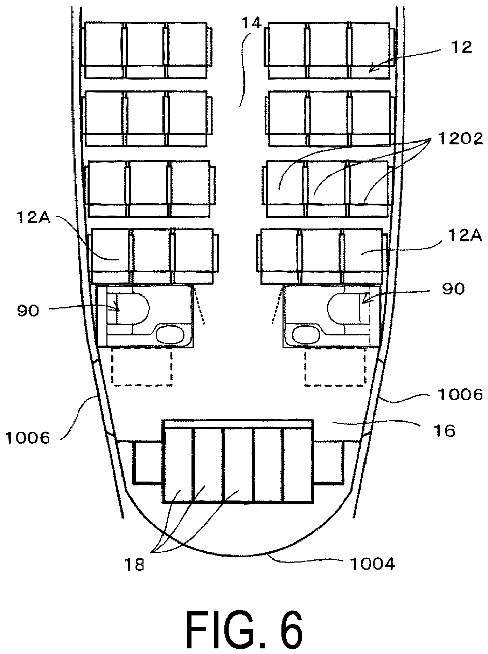

Specifically, in the present embodiment illustrated in FIGS. 1 and 2, as compared with a conventional structure in which an aircraft lavatory units 90 of Conventional Example is disposed at a rear end of each of seat groups 12 as illustrated in FIG. 6, by minimizing the width L of the aircraft lavatory unit 20, the front-to-rear spacing between the seat rows 12A of the respective seat groups 12 is reduced by approximately a few inches, for example, 1 to 2 inches and thus one seat row 12A can be added to each seat group 12.

Consequently, compared with the conventional arrangement structure in FIG. 6, the number of aircraft lavatory units 20 is kept to two, and in addition, six more of the seats 1202 can be provided, and the aircraft lavatory unit 20 advantageous in increasing the number of seats can be obtained.

Note that the number of longitudinal aisles 14, the layout of the seat groups 12, and the like differ depending on the fuselage 10. For example, a plurality of longitudinal aisles 14, for example, two longitudinal aisles 14 are provided at intervals in the width direction of the fuselage 10, the seat groups 12 are provided on both sides of each of the longitudinal aisles 14, that is, a total of three seat groups 12 are provided, and the aircraft lavatory unit 20 is provided at the rear end of each of the seat groups 12. In such a case, the front-to-rear spacing between the seat rows 12A of the respective seat groups 12 is reduced by, for example, 1 to 2 inches, and thus three seat rows 12A can be increased. For example, in a case where the seat row 12A is formed of three seats 1202, nine seats 1202 can be increased.

Alternatively, a plurality of seat groups 12, for example, three seat groups 12 are arranged in the longitudinal direction of the fuselage 10 on the both sides of the longitudinal aisle 14, that is, a total of six seat groups 12 are provided, and the aircraft lavatory unit 20 is provided at the rear end of each of the seat groups 12. In such a case, by reducing the front-to- rear spacing between the seat rows 12A of the respective seat groups 12 by, for example, 1 to 2 inches, six seat rows 12A can be increased. For example, in a case where the seat row 12A is formed of three seats 1202, eighteen seats 1202 can be increased.

Further, the sink 34 of the present embodiment has the depth D formed shorter than that of the sink of the conventional aircraft lavatory unit, and the height H is formed deeper. Consequently, a user of the aircraft lavatory unit 20 can be made intuitively think that it is not easy to put a portion such as the arm, neck, or foot other than the hands in the sink 34, and can be made intuitively think that it is difficult to wash a portion such as the arm, neck, or foot other than the hands in the sink 34. As a result, advantageously, defects such as wetting of the floor due to splashing of water drops at the time of washing of a portion such as the arm, neck, or foot other than the hands above the sink 34 can be solved.

Furthermore, the wash faucet 40 is provided at the location on the side surface 3404 of the sink 34 separated downward from the upper surface 3202 of the counter table 32, in other words, the wash faucet 40 is provided inside the sink 34. Accordingly, at the time of hand washing, the user's hands are located inside the sink 34, and in addition, water for hand washing is discharged from within the sink 34. Consequently, compared with a case water for hand washing is conventionally discharged from a location above the sink 34, advantageously, water drops can be prevented from splashing on the floor and the floor can be prevented from getting wet.

In addition, the hand dryer 46 is provided at the location on the side surface 3404 of the sink 34 separated downward from the upper surface 3202 of the counter table 32. Consequently, hand washing to drying can be automatically done inside the sink 34 when hands are put in the sink 34, and the wet hands are not positioned outside the sink 34. Thus, advantageously, water drops can be prevented from splashing on the floor and the floor can be prevented from getting wet, which is advantageous in enhancing the ease of use of the aircraft lavatory unit 20.

### Reference Signs List

20 Aircraft lavatory unit
24 Lavatory
2208A, 2208B Side wall
28 Washstand
32 Counter table
3202 Upper surface
34 Sink
3402 Bottom surface
3404 Side surface
40 Wash faucet
42 Object detecting unit
44A Faucet control unit
44B Drying control unit
46 Hand dryer
W Width
D Depth
H Height

## Claims

1. An aircraft lavatory unit comprising a washstand disposed on a side wall of a lavatory of the aircraft lavatory unit,
the washstand comprising a counter table and a sink disposed in the counter table,
the sink having a width W along the side wall, a depth D orthogonal to the width W, and a height H,
the depth D satisfying 90 mm ≤ D ≤ 160 mm, and
the height H satisfying 120 mm ≤ H ≤ 240 mm.

2. The aircraft lavatory unit according to claim 1, wherein the depth D satisfies 100 mm ≤ D ≤ 140 mm, and
the height H satisfies 150 mm ≤ H ≤ 200 mm.

3. The aircraft lavatory unit according to claim 1 or 2, wherein the width W satisfies 200 mm ≤ W ≤ 330 mm.

4. The aircraft lavatory unit according to any one of claims 1 to 3, wherein the sink comprises:
a bottom surface facing upward and a side surface standing upright from a peripheral of the bottom surface and connecting to an upper surface of the counter table;
a wash faucet provided at a location on the side surface, which is separated downward from the upper surface of the counter table;
an object detecting unit that detects an entry of an object into the sink; and
a faucet control unit allowing the wash faucet to discharge water for a predetermined water discharge time when the entry of the object is detected by the object detecting unit.

5. The aircraft lavatory unit according to claim 4, wherein the wash faucet is provided at a location on the side surface, which is located closer to the upper surface of the counter table than a middle in a height direction of the sink.

6. The aircraft lavatory unit according to claim 4 or 5, comprising: a hand dryer provided at a location on the side surface, which is separated downward from the upper surface of the counter table, the hand dryer being configured to blow air; and
a drying control unit allowing the hand dryer to blow air for a predetermined drying time when water discharging from the wash faucet ends.

7. The aircraft lavatory unit according to any one of claims 4 to 6, wherein the side surface is formed of a gently inclined curved surface configured such that a horizontal cross-sectional area of the sink gradually decreases toward a lower side with an extremely small amount from the upper surface of the counter table to a height approximately one-half the height of sink, compared with from the bottom surface of the sink to the height approximately one-half the height of the sink, and
the horizontal cross-sectional area of the sink from the upper surface of the counter table to the height approximately one-half the height of the sink is secured.

8. The aircraft lavatory unit according to any one of claims 1 to 7, wherein the aircraft lavatory unit is disposed in an aircraft comprising a longitudinal aisle and seat groups positioned on both sides of the longitudinal aisle, the seat groups being configured such that seat rows are arranged in a longitudinal direction of a fuselage;
the aircraft lavatory unit comprises the lavatory that is partitioned by a bottom wall, a pair of side walls standing upright from the bottom wall and facing each other, a rear wall and a front wall standing upright from the bottom wall and facing each other, and a ceiling wall facing the bottom wall;
a toilet is disposed in front of the rear wall such that a user can be seated facing the front wall;
the washstand is disposed at one side wall of the pair of side walls;
a doorway is disposed in the front wall; and
the aircraft lavatory unit is configured such that the other side wall of the pair of side walls is disposed close to one of the seat rows, which is located at a rear end of the seat group and such that the front wall is disposed facing the longitudinal aisle.
